# FASCICULE DE BREVET EUROPEEN

(11) **EP 3 160 767 B1**
(45) Date de publication et mention de la délivrance du brevet: **18.09.2019**
(21) Numéro de dépôt: 15725611.6
(22) Date de dépôt: 27.05.2015
(51) Int. Cl.: B60C 9/18

(54) **PNEUMATIQUE PRESENTANT DES PROPRIETES DYNAMIQUES AMELIOREES**
REIFEN MIT VERBESSERTEN DYNAMISCHEN EIGENSCHAFTEN
TYRE HAVING IMPROVED DYNAMIC PROPERTIES

(30) Priorité: 26.06.2014 FR 1455970
(43) Date de publication de la demande: 03.05.2017
(73) Titulaire: Compagnie Générale des Etablissements Michelin, 63000 Clermont-Ferrand (FR)
(72) Inventeur: REHAB, Hichem, F-63040 CLERMONT-FERRAND Cedex 9 (FR); GUPTA, Mukul, F-63040 CLERMONT-FERRAND Cedex 9 (FR)
(74) Mandataire: Le Cam, Stéphane Georges Elie
(86) Numéro de dépôt international: PCT/EP2015/061721
(87) Numéro de publication internationale: WO 2015/197296

(56) Documents cités:
- EP-A1- 0 785 096
- WO-A1-2012/052522
- WO-A1-2012/069603
- FR-A1- 2 887 807

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieure à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

On entend par « module d'élasticité » d'un mélange caoutchouteux, un module sécant d'extension à 10 % de déformation et à température ambiante.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Il est notamment connu d'introduire une couche de mélange caoutchouteux entre les extrémités des couches de travail pour créer un découplage entre lesdites extrémités pour limiter les contraintes e cisaillement. De telles couches de découplage doivent toutefois présenter une très bonne cohésion. De telles couches de mélanges caoutchouteux sont par exemple décrites dans la demande de brevet WO 2004/076204.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérèse, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

Les pneumatiques ainsi réalisés permettent effectivement d'améliorer les performances notamment en termes d'endurance.

Par ailleurs, il est connu pour réaliser des pneumatiques à bande de roulement très large ou bien pour conférer à des pneumatiques d'une dimension donnée des capacités de charges plus importantes d'introduire une couche d'éléments de renforcement circonférentiels. La demande de brevet WO 99/24269 décrit par exemple la présence d'une telle couche d'éléments de renforcement circonférentiels.

La couche d'éléments de renforcement circonférentiels est usuellement constituée par au moins un câble métallique enroulé pour former une spire dont l'angle de pose par rapport à la direction circonférentielle est inférieur à 2.5°.

Le document FR 2 887 807 décrit encore un pneumatique dont l'armature sommet comporte deux couches de travail séparées l'une de l'autre par une couche d'éléments de renforcement circonférentiels, les extrémités des couches de travail étant séparés par une couche de mélange polymérique au contact d'une couche de sommet de travail et de l'armature de carcasse.

Lors d'essais, les inventeurs ont mis en évidence que lors de sollicitations des pneumatiques en dérive sévères et fréquentes telles que l'on peut les trouver lors de roulage sur des routes sinueuses, les pneumatiques comportant ou non une couche d'éléments de renforcement circonférentiels, lesdits pneumatiques pouvaient présenter des propriétés en termes de rigidité de dérive telles, qu'il apparait un clivage au niveau des mélanges caoutchouteux constitutifs de l'armature sommet que l'on trouve entre les couches de travail. Un tel clivage est bien entendu pénalisant en termes de propriétés d'endurance du pneumatique. De tels clivages sont encore accentués lors de roulages en surcharge et à vitesse élevée, toujours sur des routes sinueuses.

Un but de l'invention est de fournir des pneumatiques dont les propriétés dynamiques, notamment la rigidité de dérive, sont améliorées et donc dont les propriétés d'endurance sont conservées quel que soit l'usage, notamment dans des conditions de roulages provoquant des sollicitations en dérive sévères.

Ce but est atteint selon l'invention par un pneumatique armature de carcasse radiale comprenant une armature de sommet formée d'au moins deux couches de sommet de travail d'éléments de renforcement, croisés d'une couche à l'autre en faisant avec la direction circonférentielle des angles compris entre 10° et 45°, une première couche S de mélange polymérique étant au contact d'au moins une couche de sommet de travail et au contact de l'armature de carcasse, ladite première couche de mélange polymérique s'étendant axialement jusqu'au moins l'extrémité axiale de la bande de roulement, ladite bande de roulement coiffant radialement l'armature de sommet et étant réunie à deux bourrelets par l'intermédiaire de deux flancs, le module complexe de cisaillement dynamique G*, mesuré à 10% et 60 °C sur le cycle retour, de ladite première couche S de mélange polymérique étant supérieur à 1.35 MPa.

Le module complexe de cisaillement dynamique (G*) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, à une température de 60°C. On effectue un balayage en amplitude de déformation de 0,1 à 50% (cycle aller), puis de 50% à 1% (cycle retour).

Selon un mode de réalisation préféré de l'invention, l'armature du sommet du pneumatique comporte au moins une couche d'éléments de renforcement circonférentiels.

Les inventeurs ont su mettre en évidence que le choix d'une première couche S présentant un module complexe de cisaillement G*, mesuré à 10% et 60 °C sur le cycle retour, supérieur à 1.35 MPa améliore les propriétés dynamiques et notamment des propriétés de rigidité de dérive du pneumatique, notamment dans les conditions de roulage particulièrement pénalisantes en termes de clivage dérive.

En effet, de manière tout à fait inattendue pour l'homme du métier, les propriétés de la première couche S de mélange polymérique, ladite couche S étant positionnée au contact de l'armature de carcasse et d'au moins une couche de l'armature de sommet, ont une influence notable sur les propriétés de rigidité de dérive. Les inventeurs ont encore mis en évidence que le choix de cette première couche S de mélange polymérique ne dégrade pas les performances relatives aux sollicitations subies par le pneumatique lors de roulages en ligne droite.

Les inventeurs ont encore su mettre en évidence que, y compris en présence d'une couche d'éléments de renforcement circonférentiels qui confère pourtant une rigidité significative au pneumatique, plus particulièrement à l'armature sommet de celui-ci, les caractéristiques énoncées ci-dessus de la première couche S apporte une contribution notable à cette propriété de rigidité de dérive.

La présence d'une couche d'éléments de renforcement circonférentiels semblait pouvoir influencer les propriétés de rigidité de dérive de manière suffisante et a priori de manière optimale du fait de la rigidité qu'elle confère au pneumatique. Les essais réalisés ont mis en évidence que les propriétés de la première couche S ont un effet important sur les propriétés de rigidité de dérive du pneumatique et permettent de les améliorer y compris en présence d'une couche d'éléments de renforcement circonférentiels.

Avantageusement selon l'invention, le module complexe de cisaillement G*, mesuré à 10% et 60 °C sur le cycle retour, de la première couche S est inférieur à 2 MPa, de sorte que les propriétés thermiques du pneumatique ne soit pas trop modifiées au risque de dégrader les propriétés d'endurance du pneumatique ainsi que ses propriétés de résistance au roulement.

Avantageusement encore, la valeur maximale de tan(δ), noté tan(δ)max, de la première couche S est inférieure à 0.100.

Selon un mode de réalisation préféré de l'invention, la première couche S de mélange polymérique comporte une charge renforçante constituée :
a) soit par du noir de carbone de surface spécifique BET comprise entre 30 et 160 m²/g, employé à un taux égal ou supérieur à 15 pce et inférieur ou égal à 28 pce,
b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m²/g employée à un taux supérieur ou égal à 15 pce et inférieur ou égal à 55 pce,
c) soit par un coupage de noir de carbone décrit en a) et une charge blanche décrite en b), dans lequel le taux global de charge est supérieur ou égal à 15 pce et inférieur ou égal à 50 pce et le taux en pce de charge blanche est supérieur ou égal au taux de noir de carbone en pce moins 5.

Les inventeurs ont encore montré que la première couche S présente une cohésion suffisamment élevée pour limiter la propagation de fissures amorcées lorsqu'un objet perfore la bande de roulement du pneumatique. Les inventeurs mettent ainsi en évidence l'obtention d'un compromis de performances du pneumatique combinant les propriétés dynamiques, notamment la rigidité de dérive et les propriétés d'endurance, y compris dans le cas énoncé ci-dessus lorsqu'un objet perfore la bande de roulement du pneumatique.

Au sens de l'invention, un mélange caoutchouteux cohésif est un mélange caoutchouteux notamment robuste à la fissuration. La cohésion d'un mélange est ainsi évaluée par un test de fissuration en fatigue réalisé sur une éprouvette « PS » (pure shear). Il consiste à déterminer, après entaillage de l'éprouvette, la vitesse de propagation de fissure «Vp» (nm/cycle) en fonction du taux de restitution d'énergie «E» (J/m²). Le domaine expérimental couvert par la mesure est compris dans la plage -20°C et +150°C en température, avec une atmosphère d'air ou d'azote. La sollicitation de l'éprouvette est un déplacement dynamique imposé d'amplitude comprise entre 0.1mm et 10mm sous forme de sollicitation de type impulsionnel (signal « haversine » tangent) avec un temps de repos égal à la durée de l'impulsion ; la fréquence du signal est de l'ordre de 10Hz en moyenne.

La mesure comprend 3 parties :
- Une accommodation de l'éprouvette « PS », de 1000 cycles à 27% de déformation.
- une caractérisation énergétique pour déterminer la loi « E » = f (déformation). Le taux de restitution d'énergie « E » est égal à W0^{∗}h0, avec W0 = énergie fournie au matériau par cycle et par unité de volume et h0 = hauteur initiale de l'éprouvette. L'exploitation des acquisitions « force / déplacement » donne ainsi la relation entre « E » et l'amplitude de la sollicitation.
- La mesure de fissuration, après entaillage de l'éprouvette « PS ». Les informations recueillies conduisent à déterminer la vitesse de propagation de la fissure « Vp » en fonction du niveau de sollicitation imposé « E ».

Selon une variante avantageuse de l'invention, le pneumatique comporte une deuxième couche G de mélange polymérique radialement entre l'armature de carcasse et la couche d'éléments de renforcement radialement la plus intérieure de l'armature de sommet de largeur axiale au moins égale à 70 % de la largeur de la couche d'éléments de renforcement radialement la plus intérieure de l'armature de sommet et présentant un module complexe de cisaillement G*, mesuré à 10% et 60 °C sur le cycle retour, supérieur à 1.35MPa.

Selon un mode de réalisation préféré de cette variante de l'invention, la largeur axiale de ladite deuxième couche G est au plus égale à la largeur de la couche d'éléments de renforcement radialement la plus intérieure de l'armature de sommet et de préférence, au moins égale à 90 % de la largeur de la couche d'éléments de renforcement radialement la plus intérieure de l'armature de sommet.

De préférence également selon cette variante de l'invention, l'épaisseur, mesurée selon la direction radiale, de ladite deuxième couche G est supérieure à φ et de préférence inférieure à 3φ, φ étant le diamètre des éléments de renforcement de la couche d'armature de sommet radialement la plus intérieure.

Les inventeurs ont encore su mettre en évidence que la deuxième couche G de mélange polymérique ainsi définie contribue encore à l'amélioration des propriétés de rigidité de dérive du pneumatique en complément de la première couche S de mélange polymérique et d'une éventuelle couche d'éléments de renforcement circonférentiels si celle-ci est présente.

Avantageusement selon l'invention, le module complexe de cisaillement G*, mesuré à 10% et 60 °C sur le cycle retour, de la deuxième couche G est inférieur à 2 MPa, de sorte que les propriétés thermiques du pneumatique ne soit pas trop modifiées au risque de dégrader les propriétés d'endurance du pneumatique ainsi que ses propriétés de résistance au roulement.

Avantageusement encore, la valeur maximale de tan(δ), noté tan(δ)max, de la deuxième couche G est inférieure à 0.100.

Selon un mode de réalisation préféré de cette variante de l'invention, la deuxième couche G de mélange polymérique comporte une charge renforçante constituée :
a) soit par du noir de carbone de surface spécifique BET comprise entre 30 et 160 m²/g, employé à un taux égal ou supérieur à 15 pce et inférieur ou égal à 28 pce,
b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m²/g employée à un taux supérieur ou égal à 15 pce et inférieur ou égal à 55 pce,
c) soit par un coupage de noir de carbone décrit en a) et une charge blanche décrite en b), dans lequel le taux global de charge est supérieur ou égal à 15 pce et inférieur ou égal à 50 pce et le taux en pce de charge blanche est supérieur ou égal au taux de noir de carbone en pce moins 5.

Avantageusement le mélange polymérique constituant la deuxième couche G est identique au mélange polymérique constituant la deuxième couche S.

Selon un mode de réalisation avantageux de l'invention, la couche de sommet de travail axialement la plus large est radialement à l'intérieur des autres couches de sommet de travail.

Selon une variante avantageuse de réalisation de l'invention, la couche d'éléments de renforcement circonférentiels présente une largeur axiale supérieure à 0.5xW.

W est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préférée de l'invention, une couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par ladite couche C de mélange de caoutchouc au moins sur le restant de la largeur commune aux dites deux couches de travail.

La présence de tels couplages entre les couches de sommet de travail adjacentes à la couche d'éléments de renforcement circonférentiels permet la diminution des contraintes de tension agissant sur les éléments circonférentiels axialement le plus à l'extérieur et situé le plus près du couplage.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

Selon un mode de réalisation préféré de l'invention, les éléments de renforcement des couches de sommet de travail sont des câbles métalliques inextensibles.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

Le pneumatique selon l'invention tel qu'il vient d'être décrit présente donc des propriétés de rigidité de dérive améliorées et donc des performances en termes d'endurance renforcées quelles que soient les conditions de roulage.

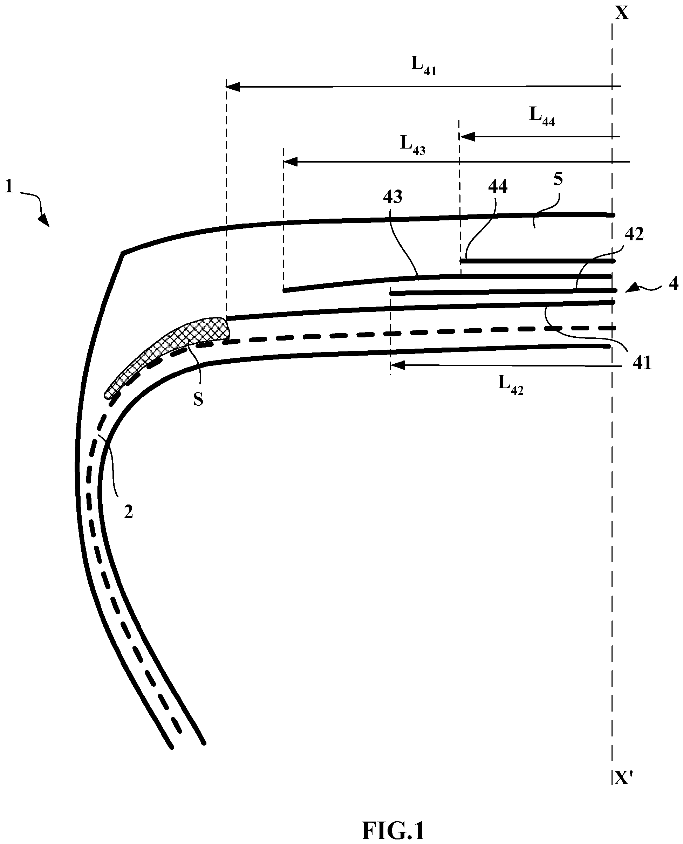

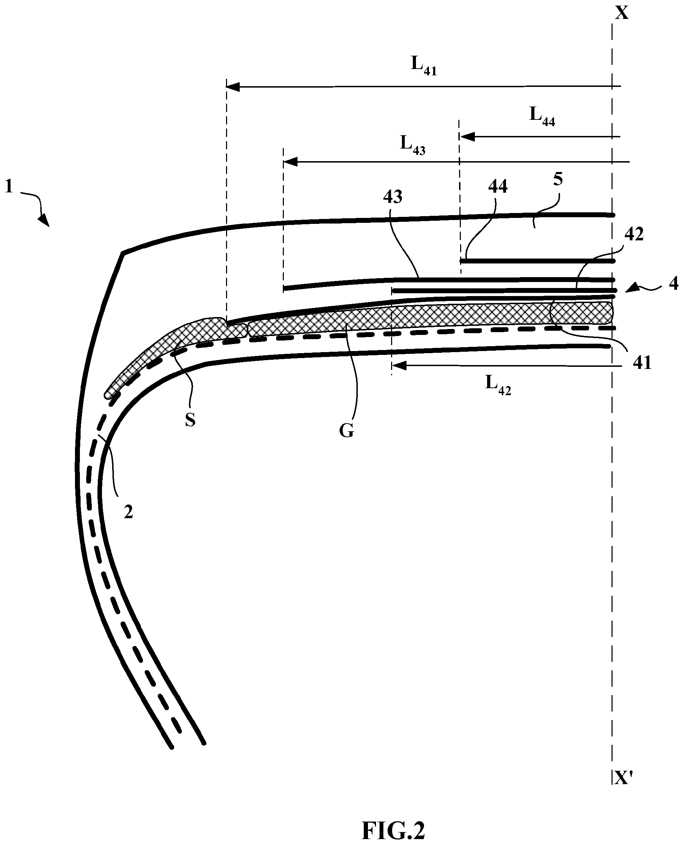

D'autres détails et caractéristiques avantageux de l'invention ressortiront ci-après de la description des exemples de réalisation de l'invention en référence aux figures 1 et 2 qui représentent :
- figure 1, une vue méridienne d'un schéma d'un pneumatique selon un premier mode de réalisation de l'invention,
- figure 2, une vue méridienne d'un schéma d'un pneumatique selon un deuxième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/70 R 22.5, a un rapport de forme H/S égal à 0, 70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :
- d'une première couche de travail 41 formée de câbles métalliques inextensibles 9.28 non frettés, continus sur toute la largeur de la nappe, orientés d'un angle égal à 24°,
- d'une couche d'éléments de renforcement circonférentiels 42 formée de câbles métalliques en acier 21x23, de type "bi-module",
- d'une seconde couche de travail 43 formée de câbles métalliques inextensibles 9.28 non frettés, continus sur toute la largeur de la nappe, orientés d'un angle égal à 24° et croisés avec les câbles métalliques de la couche 41,
- d'une couche de protection 44 formées de câbles métalliques élastiques 6.35.

L'armature de sommet est elle-même coiffée d'une bande de roulement 5.

La largeur axiale maximale W du pneumatique est égale à 317 mm.

La largeur axiale L₄₁ de la première couche de travail 41 est égale à 252 mm.

La largeur axiale L₄₃ de la deuxième couche de travail 43 est égale à 232 mm. La différence entre les largeurs L₄₁ et L₄₃ est égale à 15 mm.

Quant à la largeur axiale L₄₂ de la couche d'éléments de renforcement circonférentiels 42, elle est égale à 194 mm.

La dernière nappe de sommet 44, dite de protection, a une largeur L₄₄ égale à 124 mm.

Selon l'invention, une première couche S de mélange caoutchouteux est mise en place entre l'armature de carcasse 2 et la première couche de travail 41.

Sur la figure 2, le pneumatique 1 diffère de celui représenté sur la figure 1 en ce qu'une deuxième couche G prolonge axialement la première couche S, radialement entre l'armature de carcasse 2 et la première couche de travail 41.

Des essais ont été réalisés avec différents pneumatiques S1 et S2 réalisés selon l'invention. Le pneumatique S2 est réalisé conformément à la représentation de la figure 1 et le pneumatique S1 ne comporte pas de couche d'éléments de renforcement circonférentiels. Ces pneumatiques selon l'invention S1 et S2 sont comparés avec un pneumatique de référence T1, ne comportant pas de couche d'éléments de renforcement circonférentiels et dont le module complexe de cisaillement dynamique G*, mesuré à 10% et 60 °C sur le cycle retour, de ladite première couche S de mélange polymérique est inférieure à 1.35 MPa.

Les différents mélanges utilisés pour la première couche S sont listés ci-après.

| | Mélange R1 | Mélange 1 |
|---|---|---|
| NR | 100 | 100 |
| Noir N326 | | 5 |
| Noir N330 | 35 | |
| Silice 165G | | 40 |
| Antioxydant (6PPD) | 0,7 | 1,5 |
| Acide stéarique | 1,4 | 1 |
| Oxyde de zinc | 2,1 | 5 |
| Silane sur noir | | 5 |
| soufre | 2,15 | 1,75 |
| PEG | | 2,5 |
| Accélérateur CBS | 1 | 0,9 |
| Co-accélérateur DPG | | 0,34 |
| Retardateur CTP PVI) | 0,08 | |
| MA₁₀(MPa) | 3,4 | 4,3 |
| tan(δ)ₘₐₓ | 0,074 | 0,087 |
| P60 (%) | 11,3 | 16,5 |
| G* 10% à 60°C (cycle retour) | 1,25 | 1,55 |

Les valeurs des constituants sont exprimées en pce (parties en poids pour cent parties d'élastomères.

Le pneumatique de référence T1 possède une première couche S constituée du mélange R1.

Les pneumatiques selon l'invention S1 et S2 possède une première couche S constituée du mélange 1.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

Il s'avère que l'ensemble des pneumatiques testés présente des résultats sensiblement comparables.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les distances parcourues varient d'un type de pneumatique à l'autre, des déchéances apparaissant du fait d'une dégradation des mélanges caoutchouteux au niveau des extrémités des couches de travail. Les résultats sont exprimés dans le tableau qui suit en référence à une base 100 fixé pour le pneumatique de référence T1.

| Pneumatique T1 | Pneumatique S1 | Pneumatique S2 |
|---|---|---|
| 100 | 125 | 135 |

Ces résultats montrent que la première couche S selon l'invention dont le module complexe de cisaillement dynamique G*, mesuré à 10% et 60 °C sur le cycle retour, est supérieure à 1.35 MPa permet d'améliorer très sensiblement les performances d'endurance et plus particulièrement les propriétés de rigidité de dérive du pneumatique, y compris en présence 'une couche d'éléments de renforcement circonférentiels.

## Revendications

1. Pneumatique (1) à armature de carcasse radiale (2) comprenant une armature de sommet (4) formée d'au moins deux couches de sommet de travail (41, 43) d'éléments de renforcement, croisés d'une couche à l'autre en faisant avec la direction circonférentielle des angles compris entre 10° et 45°, une première couche (S) de mélange polymérique étant au contact d'au moins une couche de sommet de travail (41, 43) et au contact de l'armature de carcasse (2), ladite première couche (S) de mélange polymérique s'étendant axialement jusqu'au moins l'extrémité axiale de la bande de roulement (5), ladite bande de roulement (5) coiffant radialement l'armature sommet (4) et étant réunie à deux bourrelets par l'intermédiaire de deux flancs, **caractérisé en ce que** le module complexe de cisaillement dynamique G*, mesuré à 10% et 60 °C sur le cycle retour, de ladite première couche (S) de mélange polymérique est supérieur à 1.35 MPa.

2. Pneumatique (1) selon la revendication 1, **caractérisé en ce que** l'armature de sommet (4) comporte au moins une couche d'éléments de renforcement circonférentiels (42).

3. Pneumatique (1) selon la revendication 1 ou 2, **caractérisé en ce que** le module complexe de cisaillement G*, mesuré à 10% et 60 °C sur le cycle retour, de la première couche (S) est inférieur à 2 MPa.

4. Pneumatique (1) selon l'une des revendications 1 à 3, **caractérisé en ce que** la valeur maximale de tan(δ), noté tan(δ)max, de la première couche (S) est inférieure à 0.100.

5. Pneumatique (1) selon l'une des revendications précédentes, **caractérisé en ce que** ladite première couche (S) de mélange polymérique comporte une charge renforçante constituée :
a) soit par du noir de carbone de surface spécifique BET comprise entre 30 et 160 m²/g, employé à un taux égal ou supérieur à 15 pce et inférieur ou égal à 28 pce,
b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m²/g employée à un taux supérieur ou égal à 15 pce et inférieur ou égal à 55 pce,
c) soit par un coupage de noir de carbone décrit en a) et une charge blanche décrite en b), dans lequel le taux global de charge est supérieur ou égal à 15 pce et inférieur ou égal à 50 pce et le taux en pce de charge blanche est supérieur ou égal au taux de noir de carbone en pce moins 5.

6. Pneumatique (1) selon l'une des revendications précédentes, ledit pneumatique comportant une deuxième couche (G) de mélange polymérique axialement au contact de la première couche (S) de mélange polymérique radialement entre l'armature de carcasse (2) et la couche (41) d'éléments de renforcement radialement la plus intérieure de l'armature de sommet (4), **caractérisé en ce que** le module complexe de cisaillement dynamique G*, mesuré à 10% et 60 °C sur le cycle retour, de ladite deuxième couche (G) de mélange polymérique est supérieur à 1.35 MPa.

7. Pneumatique (1) selon la revendication 6, **caractérisé en ce que** le module complexe de cisaillement G*, mesuré à 10% et 60 °C sur le cycle retour, de la deuxième couche (G) est inférieur à 2 MPa.

8. Pneumatique (1) selon l'une des revendications 6 ou 7, **caractérisé en ce que** la valeur maximale de tan(δ), noté tan(δ)max, de la deuxième couche (G) est inférieure à 0.100.

9. Pneumatique (1) selon l'une des revendications 6 à 8, **caractérisé en ce que** ladite deuxième couche (G) de mélange polymérique comporte une charge renforçante constituée :
a) soit par du noir de carbone de surface spécifique BET comprise entre 30 et 160 m²/g, employé à un taux égal ou supérieur à 15 pce et inférieur ou égal à 28 pce,
b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m²/g employée à un taux supérieur ou égal à 15 pce et inférieur ou égal à 55 pce,
c) soit par un coupage de noir de carbone décrit en a) et une charge blanche décrite en b), dans lequel le taux global de charge est supérieur ou égal à 15 pce et inférieur ou égal à 50 pce et le taux en pce de charge blanche est supérieur ou égal au taux de noir de carbone en pce moins 5.

10. Pneumatique (1) selon l'une des revendications 2 à 9, **caractérisé en ce que** la couche d'éléments de renforcement circonférentiels (42) est radialement disposée entre deux couches de sommet de travail (41, 43).

11. Pneumatique (1) selon la revendication 10, **caractérisé en ce que** les largeurs axiales des couches de sommet de travail (41, 43) radialement adjacentes à la couche d'éléments de renforcement circonférentiels (42) sont supérieures à la largeur axiale de ladite couche d'éléments de renforcement circonférentiels (42).

12. Pneumatique (1) selon la revendication 11, **caractérisé en ce que** les couches de sommet de travail (41, 43) adjacentes à la couche d'éléments de renforcement circonférentiels (42) sont de part et d'autre du plan équatorial et dans le prolongement axial immédiat de la couche d'éléments de renforcement circonférentiels (42) couplées sur une largeur axiale, pour être ensuite découplées par des profilés de mélange de caoutchouc au moins sur le restant de la largeur commune aux dites deux couches de travail (41, 43).

13. Pneumatique (1) selon l'une des revendications 2 à 12, **caractérisé en ce que** les éléments de renforcement d'au moins une couche d'éléments de renforcement circonférentiels (42) sont des éléments de renforcement métalliques présentant un module sécant à 0,7 % d'allongement compris entre 10 et 120 GPa et un module tangent maximum inférieur à 150 GPa.

14. Pneumatique (1) selon l'une des revendications précédentes, **caractérisé en ce que** les éléments de renforcement des couches de sommet de travail (41, 43) sont inextensibles.

15. Pneumatique (1) selon l'une des revendications précédentes, **caractérisé en ce que** l'armature de sommet (4) est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail (43) qui lui est radialement adjacente.

## Patentansprüche

1. Reifen (1) mit radialer Karkassenverstärkung (2), der eine Oberteilverstärkung (4) umfasst, die aus mindestens zwei Oberteilarbeitsschichten (41, 43) aus Verstärkungselementen gebildet ist, die von einer Schicht zur nächsten gekreuzt sind, indem sie mit der Umfangsrichtung Winkel zwischen 10° und 45° bilden, wobei eine erste Schicht (S) aus einem Polymergemisch mindestens eine Oberteilarbeitsschicht (41, 43) berührt und die Karkassenverstärkung (2) berührt, wobei die erste Schicht (S) aus einem Polymergemisch axial bis mindestens zum axialen Ende der Lauffläche (5) verläuft, wobei die Lauffläche (5) radial die Oberteilverstärkung (4) bedeckt und über zwei Seitenwände mit zwei Wülsten verbunden ist, **dadurch gekennzeichnet, dass** der komplexe dynamische Schubmodul G* der ersten Schicht (S) aus einem Polymergemisch, gemessen bei 10 % und 60 °C im Rücklauf, mehr als 1,35 MPa beträgt.

2. Reifen (1) nach Anspruch 1, **dadurch gekennzeichnet, dass** die Oberteilverstärkung (4) mindestens eine Schicht aus Umfangsverstärkungselementen (42) aufweist.

3. Reifen (1) nach Anspruch 1 oder 2, **dadurch gekennzeichnet, dass** der komplexe Schubmodul G* der ersten Schicht (S), gemessen bei 10 % und 60 °C im Rücklauf, unter 2 MPa beträgt.

4. Reifen (1) nach einem der Ansprüche 1 bis 3, **dadurch gekennzeichnet, dass** der als tan(δ)max bezeichnete Höchstwert von tan(δ) der ersten Schicht (S) unter 0,100 beträgt.

5. Reifen (1) nach einem der vorhergehenden Ansprüche, **dadurch gekennzeichnet, dass** die erste Schicht (S) aus einem Polymergemisch einen Verstärkungsfüllstoff bestehend aus:
a) entweder Ruß mit einer spezifischen BET-Oberfläche zwischen 30 und 160 m²/g, der mit einem Anteil größer gleich 15 phr und kleiner gleich 28 phr eingesetzt wird,
b) oder einem weißen Füllstoff vom Siliciumdioxid- und/oder Aluminiumoxid-Typ mit SiOH- und/oder AlOH-Oberflächenfunktionen aus der Gruppe bestehend aus gefällten oder pyrogenen Siliciumdioxiden, Aluminiumoxiden oder Aluminosilikaten oder auch bei oder nach der Synthese modifizierten Rußen mit einer spezifischen Oberfläche zwischen 30 und 260 m²/g, der mit einem Anteil größer gleich 15 phr und kleiner gleich 55 phr eingesetzt wird,
c) oder einem Verschnitt aus Ruß, der in a) beschrieben wird, sowie einem weißen Füllstoff, der in b) beschrieben wird, wobei der Gesamtanteil an Füllstoff größer gleich 15 phr und kleiner oder gleich 50 phr beträgt und der Anteil an weißem Füllstoff in phr größer gleich dem Anteil an Ruß in phr minus 5 ist, umfasst.

6. Reifen (1) nach einem der vorhergehenden Ansprüche, wobei der Reifen eine zweite Schicht (G) aus einem Polymergemisch aufweist, das axial die erste Schicht (S) aus einem Polymergemisch radial zwischen der Karkassenverstärkung (2) und der radial am weitesten innenliegenden Schicht (41) aus Verstärkungselementen der Oberteilverstärkung (4) berührt, **dadurch gekennzeichnet, dass** der komplexe dynamische Schubmodul G* der zweiten Schicht (G) aus einem Polymergemisch, gemessen bei 10 % und 60 °C im Rücklauf, mehr als 1,35 MPa beträgt.

7. Reifen (1) nach Anspruch 6, **dadurch gekennzeichnet, dass** der komplexe Schubmodul G* der zweiten Schicht (G), gemessen bei 10 % und 60 °C im Rücklauf, unter 2 MPa beträgt.

8. Reifen (1) nach Anspruch 6 oder 7, **dadurch gekennzeichnet, dass** der als tan(δ)max bezeichnete Höchstwert von tan(δ) der zweiten Schicht (G) unter 0,100 beträgt.

9. Reifen (1) nach einem der Ansprüche 6 bis 8, **dadurch gekennzeichnet, dass** die zweite Schicht (G) aus einem Polymergemisch einen Verstärkungsfüllstoff bestehend aus:
a) entweder Ruß mit einer spezifischen BET-Oberfläche zwischen 30 und 160 m²/g, der mit einem Anteil größer gleich 15 phr und kleiner gleich 28 phr eingesetzt wird,
b) oder einem weißen Füllstoff vom Siliciumdioxid- und/oder Aluminiumoxid-Typ mit SiOH- und/oder AlOH-Oberflächenfunktionen aus der Gruppe bestehend aus gefällten oder pyrogenen Siliciumdioxiden, Aluminiumoxiden oder Aluminosilikaten oder auch bei oder nach der Synthese modifizierten Rußen mit einer spezifischen Oberfläche zwischen 30 und 260 m²/g, der mit einem Anteil größer gleich 15 phr und kleiner gleich 55 phr eingesetzt wird,
c) oder einem Verschnitt aus Ruß, der in a) beschrieben wird, sowie einem weißen Füllstoff, der in b) beschrieben wird, wobei der Gesamtanteil an Füllstoff größer gleich 15 phr und kleiner gleich 50 phr beträgt und der Anteil an weißem Füllstoff in phr größer oder gleich dem Anteil an Ruß in phr minus 5 ist, umfasst.

10. Reifen (1) nach einem der Ansprüche 2 bis 9, **dadurch gekennzeichnet, dass** die Schicht aus Umfangsverstärkungselementen (42) radial zwischen zwei Oberteilarbeitsschichten (41, 43) angeordnet ist.

11. Reifen (1) nach Anspruch 10, **dadurch gekennzeichnet, dass** die axiale Breite der Oberteilarbeitsschichten (41, 43) radial angrenzend an die Schicht aus Umfangsverstärkungselementen (42) größer ist als die axiale Breite der Schicht aus Umfangsverstärkungselementen (42).

12. Reifen (1) nach Anspruch 11, **dadurch gekennzeichnet, dass** die Oberteilarbeitsschichten (41, 43) angrenzend an die Schicht aus Umfangsverstärkungselementen (42) auf beiden Seiten der Äquatorebene und in der unmittelbaren axialen Verlängerung der Schicht aus Umfangsverstärkungselementen (42) über eine axiale Breite verbunden sind, damit sie dann durch Profile aus einem Kautschukgemisch zumindest über die übrige gemeinsame Breite der beiden Arbeitsschichten (41, 43) getrennt sind.

13. Reifen (1) nach einem der Ansprüche 2 bis 12, **dadurch gekennzeichnet, dass** die Verstärkungselemente von mindestens einer Schicht aus Umfangsverstärkungselementen (42) Metallverstärkungselemente mit einem Sekantenmodul bei 0,7 % Dehnung zwischen 10 und 120 GPa und einem maximalen Tangentenmodul von unter 150 GPa sind.

14. Reifen (1) nach einem der vorhergehenden Ansprüche, **dadurch gekennzeichnet, dass** die Verstärkungselemente der Oberteilarbeitsschichten (41, 43) nicht dehnbar sind.

15. Reifen (1) nach einem der vorhergehenden Ansprüche, **dadurch gekennzeichnet, dass** die Oberteilverstärkung (4) radial außen durch mindestens eine zusätzliche als Schutzlage bezeichnete Lage aus als elastisch bezeichneten Verstärkungselementen vervollständigt ist, die zur Umfangsrichtung unter einem Winkel zwischen 10° und 45° und in derselben Richtung wie der Winkel ausgerichtet sind, den die nicht dehnbaren Elemente der Arbeitslage (43) bilden, die radial daran angrenzt.

## Claims

1. Tyre (1) with a radial carcass reinforcement (2) comprising a crown reinforcement (4) formed of at least two working crown layers (41, 43) of reinforcing elements, crossed from one layer to the other making with the circumferential direction angles comprised between 10° and 45°, a first layer (S) of polymer compound being in contact with at least one working crown layer (41, 43) and in contact with the carcass reinforcement (2), the said first layer (S) of polymer compound extending axially as far as at least the axial end of the tread (5), the said tread (5) radially capping the crown reinforcement (4) and being connected to two beads by two sidewalls, **characterized in that** the complex dynamic shear modulus G*, measured at 10% and 60°C on the return cycle, of the said first layer (S) of polymer compound is greater than 1.35 MPa.

2. Tyre (1) according to Claim 1, **characterized in that** the crown reinforcement (4) comprises at least one layer of circumferential reinforcing elements (42).

3. Tyre (1) according to Claim 1 or 2, **characterized in that** the complex shear modulus G*, measured at 10% and 60°C on the return cycle, of the second layer (S) is less than 2 MPa.

4. Tyre (1) according to one of Claims 1 to 3, **characterized in that** the maximum value of tan(δ), denoted tan(δ)max, of the first layer (S) is less than 0.100.

5. Tyre (1) according to one of the preceding claims, **characterized in that** the said first layer (S) of polymer compound comprises a reinforcing filler composed of:
a) either carbon black with a BET specific surface area of between 30 and 160 m2/g, used in a content equal to or greater than 15 phr and less than or equal to 28 phr,
b) or a white filler of the silica and/or alumina type comprising SiOH and/or AlOH surface functional groups selected from the group formed of precipitated or pyrogenated silicas, aluminas or aluminosilicates or alternatively carbon blacks modified during or after synthesis with a specific surface area of between 30 and 260 m2/g used at a content greater than or equal to 15 phr and less than or equal to 55 phr,
c) or a blend of carbon black described at (a) and a white filler described at (b), in which the overall filler content is greater than or equal to 15 phr and less than or equal to 50 phr and the white filler phr content is greater than or equal to the phr content of carbon black minus 5.

6. Tyre (1) according to one of the preceding claims, the said tyre comprising a second layer (G) of polymer compound axially in contact with the first layer (S) of polymer compound radially between the carcass reinforcement (2) and the radially innermost layer (41) of reinforcing elements of the crown reinforcement, **characterized in that** the complex dynamic shear modulus G*, measured at 10% and 60°C on the return cycle, of the said second layer (G) of polymer compound is greater than 1.35 MPa.

7. Tyre (1) according to Claim 6, **characterized in that** the complex shear modulus G*, measured at 10% and 60°C on the return cycle, of the second layer (G) is less than 2 MPa.

8. Tyre (1) according to one of Claims 6 and 7 **characterized in that** the maximum value of tan(δ), denoted tan(δ)max, of the second layer (G) is less than 0.100.

9. Tyre (1) according to one of Claims 6 to 8, **characterized in that** the said second layer (G) of polymer compound comprises a reinforcing filler made up of:
a) either carbon black with a BET specific surface area of between 30 and 160 m2/g, used in a content equal to or greater than 15 phr and less than or equal to 28 phr,
b) or a white filler of the silica and/or alumina type comprising SiOH and/or AlOH surface functional groups selected from the group formed of precipitated or pyrogenated silicas, aluminas or aluminosilicates or alternatively carbon blacks modified during or after synthesis with a specific surface area of between 30 and 260 m2/g used at a content greater than or equal to 15 phr and less than or equal to 55 phr,
c) or a blend of carbon black described at (a) and a white filler described at (b), in which the overall filler content is greater than or equal to 15 phr and less than or equal to 50 phr and the white filler phr content is greater than or equal to the phr content of carbon black minus 5.

10. Tyre (1) according to one of Claims 2 to 9, **characterized in that** the layer of circumferential reinforcing elements (42) is placed radially between two working crown layers (41, 43).

11. Tyre (1) according to Claim 10, **characterized in that** the axial widths of the working crown layers (41, 43) radially adjacent to the layer of circumferential reinforcing elements (42) are greater than the axial width of the said layer of circumferential reinforcing elements (42).

12. Tyre (1) according to Claim 11, **characterized in that** the working crown layers (41, 43) radially adjacent to the layer of circumferential reinforcing elements (42) are, on each side of the equatorial plane and in the immediate axial continuation of the layer of circumferential reinforcing elements (42), coupled over an axial width and then decoupled by profiled elements made of rubber compound at least over the remainder of the width that the said two working layers (41, 43) have in common.

13. Tyre (1) according to Claims 2 to 12, **characterized in that** the reinforcing elements of at least one layer of circumferential reinforcing elements (42) are metallic reinforcing elements having a secant modulus at 0.7% elongation comprised between 10 and 120 GPa and a maximum tangent modulus less than 150 GPa.

14. Tyre (1) according to one of the preceding claims, **characterized in that** the reinforcing elements of the working crown layers (41, 43) are inextensible.

15. Tyre (1) according to one of the preceding claims, **characterized in that** the crown reinforcement (4) is supplemented radially on the outside by at least one additional ply, referred to as a protective ply, of reinforcing elements referred to as elastic elements, which are oriented with respect to the circumferential direction at an angle of between 10° and 45° in the same direction as the angle formed by the inextensible elements of the working ply (43) radially adjacent to it.
